# EUROPÄISCHE PATENTSCHRIFT

(11) **EP 2 105 231 B1**
(45) Veröffentlichungstag und Bekanntmachung des Hinweises auf die Patenterteilung: **17.01.2018**
(21) Anmeldenummer: 09400013.0
(22) Anmeldetag: 21.03.2009
(51) Int. Cl.: B23D 47/02, B23D 49/16, B23D 51/02, B27B 9/00, B27B 9/02

(54) **Hand-Werkzeugmaschine**
Hand machine tool
Machine-outil manuelle

(30) Priorität: 25.03.2008 DE 102008015480
(43) Veröffentlichungstag der Anmeldung: 30.09.2009
(73) Patentinhaber: Festool GmbH, 73240 Wendlingen am Neckar (DE)
(72) Erfinder: Reuss, Torsten, 73265 Dettingen (DE); Höfer, Tobias, 73547 Lorch (DE)
(74) Vertreter: Patentanwälte Bregenzer und Reule Partnerschaftsgesellschaft mbB

(56) Entgegenhaltungen:
- DE-A1- 2 201 882
- DE-A1- 3 428 445
- DE-U1- 9 413 397
- DE-U1- 9 417 415

## Beschreibung

Die Erfindung betrifft eine Hand-Werkzeugmaschine, und ein Werkstück-Tisch für eine Hand-Werkzeugmaschine, insbesondere eine maschinelle Hand-Säge oder einen maschinellen Hobel, mit einem Werkzeug zur Bearbeitung eines Werkstücks; einem in einem Gehäuse aufgenommenen Antriebsmotor zum Antreiben des Werkzeugs, und mit einem an dem Gehäuse angeordneten Werkstück-Tisch zum Anlegen an das Werkstück, wobei ein Abschnitt des Werkzeugs vor den Werkstück-Tisch an einer von dem Gehäuse abgewandten Seite vorsteht gemäß den Oberbegriffen der Ansprüche 1 und 14. Eine derartige Hand-Werkzeugmaschine und Werkstück-Tisch für eine derartige Hand-Werkzeugmaschine gehen aus DE 22 01 882 A1 hervor.
Bei Hand-Werkzeugmaschinen, beispielsweise Handsägen, insbesondere Kreissägen, Stichsägen und dergleichen, sowie auch bei maschinellen Hobeln, Oberfräsen und dergleichen ist es üblich, dass ein jeweiliger Werkstück-Tisch, der an das Werkstück angelegt wird, eine Führungsfläche oder Anlagefläche aufweist. Mit Hilfe der Anlagefläche ist es möglich, das Werkzeug bezüglich des Werkstückes zur insbesondere spanabhebenden oder sägenden Werkstück-Bearbeitung zu positionieren.
Problematisch ist es allerdings, wenn beispielsweise winkelige oder runde Oberflächen zu bearbeiten sind, beispielsweise Rohre, Kanten eines Werkstücks oder dergleichen. Dann ist eine stabile Winkellage des Werkstücktisches bezüglich des Werkstückes nur schwer oder gar nicht einstellbar, so dass die Werkstückbearbeitung nicht exakt ist.

Es ist daher die Aufgabe der vorliegenden Erfindung, die Führung einer Hand-Werkzeugmaschine bezüglich eines runden oder polygonalen Werkstückes zu verbessern.
Zur Lösung der Aufgabe ist eine Hand-Werkzeugmaschine gemäß der technischen Lehre des Anspruchs 1 und ein Werkstück-Tisch für eine Hand-Werkzeugmaschine gemäß der technischen Lehre des Anspruchs 14 vorgesehen.
Die erfindungsgemäße Hand-Werkzeugmaschine ist zweckmäßigerweise ein Elektro-Handwerkzeug. Die Erfindung kann aber auch bei einem pneumatisch betätigbaren Hand-Werkzeug, d.h. einer Hand-Werkzeugmaschine mit einem Pneumatikantrieb, verwendet werden.
Die erfindungsgemäße Hand-Werkzeugmaschine ist zweckmäßigerweise eine maschinelle Hand-Säge, z.B. Kreissäge oder eine Hubsäge, insbesondere eine Stichsäge, ein maschineller Hobel, eine Oberfräse oder dergleichen.
Die Werkstück-Tischteile sind vorzugsweise schwenkbeweglich oder schwenkschiebebeweglich bezüglich der Werkstück-Tischbasis gelagert. Eine Schwenklagerung ist bevorzugt. Jedenfalls ermöglicht die bewegliche Lagerung der beiden Werkstück-Tischteile unterschiedliche Winkelstellungen der Führungsflächen zueinander. Dabei ist ein spitzer Winkel zwischen den beiden Führungsflächen oder auch ein stumpfer Winkel einstellbar. Es versteht sich, dass auch zueinander fluchtende Führungsflächen einstellbar sein sollten. Man kann die Werkstück-Tischteile auch als Werkstück-Tischflügel bezeichnen.
Eine jeweilige Schwenkachse oder gemeinsame Schwenkachse des ersten und/oder des zweiten Werkstück-Tischteils verläuft zweckmäßigerweise parallel zu einer Bearbeitungsebene, beispielsweise einer Sägeebene, des Werkzeugs. Das jeweilige Tischteil schwenkt also um eine Schwenkachse, die zu einer Bearbeitungsebene parallel ist, beispielsweise parallel zur Oberfläche eines Werkstücks, in der das Werkzeug, insbesondere das Sägeblatt, arbeitet. Die Bearbeitungsebene korrespondiert dann mit einer Führungsfläche eines Werkstück-Tischteils.

Mindestens eine Führungsfläche eines Werkstück-Tischteils bildet zweckmäßigerweise ein Widerlager für das Werkzeug. Wenn das Werkzeug beispielsweise durch ein Sägeblatt gebildet ist, schneidet dieses beispielsweise bei einer Bewegung in Richtung des Gehäuses der Hand-Werkzeugmaschine in das Werkstück ein. Dabei stützt sich die Hand-Werkzeugmaschine mit der jeweiligen ersten und/oder zweiten Führungsfläche auf dem Werkstück ab, so dass die jeweilige Führungsfläche eine Stützfläche oder ein Widerlager bildet.

Bevorzugt ist eine kontinuierliche Einstellbarkeit der verschiedenen Winkelstellungen, so dass beliebige Winkel einstellbar sind. Es können aber auch in einer anderen, im Ausführungsbeispiel nicht dargestellten Ausführungsform des erfindungsgemäßen Werkstück-Tisches Rastungen dergleichen Vorgabemittel vorgesehen sein, um eine oder mehrere Winkelstellungen der Werkstück-Tischteile zueinander vorzugeben, beispielweise eine Horizontalstellung, bei der die Führungsflächen der beiden Werkstück-Tischteile auf einer Ebene liegen.

Das Werkzeug steht zweckmäßigerweise zwischen der ersten und der zweiten Führungsfläche zwischen dem Werkstück-Tisch vor. Somit ist das Werkzeug, beispielsweise ein Säge-Werkzeug, zwischen dem ersten und dem zweiten Werkstück-Tischteil angeordnet.

Prinzipiell wäre es möglich, dass die Tischbasis beispielsweise schwenkbar an dem Gehäuse gelagert ist, so dass eine Winkelstellung des Werkzeugs bezüglich der ebenfalls zueinander winkeligen Führungsflächen einstellbar ist.

Vorzugsweise ist das Werkzeug bei jeder Winkelstellung der ersten und zweiten Führungsfläche zueinander an einer oder parallel zu einer Winkelhalbierenden eines Winkels zwischen den beiden Führungsflächen angeordnet. So ist beispielsweise die Längsachse eines Stichsägenblattes oder eines Fräsers, eines Kreissägeblattes oder dergleichen dann an einer oder parallel zu einer Winkelhalbierenden zwischen den beiden Führungsflächen positioniert. Beispielsweise verläuft eine Schwenkachse der Werkstück-Tischteile parallel zu einer Schnittachse des Werkzeugs.

Bei einem erfindungsgemäßen Werkstück-Tisch ist es durch beispielsweise Schrägstellung oder Parallelverstellung der jeweiligen Führungsfläche eines Werk-Tischteils möglich, das Werkzeug in eine Winkellage oder in eine versetzte Position bezüglich des zu bearbeitenden Werkstückes zu bringen. Eine Schrägverstellung des Werkstück-Tisches als Ganzes bezüglich des Gehäuses der Hand-Werkzeugmaschine ist daher nicht nötig, was z.B. die Anbringung des Werkstück-Tisches am Gehäuse vereinfacht. Dies erweitert den Einsatzbereich eines erfindungsgemäßen Werkstück-Tisches über den Einsatzbereich an Innenkanten oder Außenkanten hinaus. Eine optionale Auflageplatte oder ein Auflageelement, die oder das vorzugsweise in der Art eines Schuhs an einem Werk-Tischteil angeordnet werden kann, erweitert zweckmäßigerweise die jeweilige Führungsfläche des Werk-Tischteils.

Die Haltemittel zum Halten der Werkstück-Tischteile in der jeweiligen Winkelstellung können beispielsweise eine Klemmeinrichtung zum Klemmen der Werkstück-Tischteile umfassen.

Es ist ein Verstellgetriebe zu einer Verstellung der Winkelstellungen der Werkstück-Tischteile zueinander vorgesehen.

Mit Hilfe des Verstellgetriebes ist es einfach realisierbar, dass das Werkzeug jeder Winkelstellung der beiden Führungsflächen zueinander an einer oder parallel zu einer Winkelhalbierenden zwischen den Führungsflächen angeordnet ist.

Zum Festlegen der Werkstück-Tischteile kann auch bei Vorhandensein eines Verstellgetriebes beispielsweise eine Klemmeinrichtung vorgesehen sein. Auch eine Rasteinrichtung ist denkbar. Beispielsweise kann an einem Zahnrad, insbesondere einem Kegelrad, des Verstellgetriebes eine auf Zähne des Zahnrads wirkende, vorteilhaft federbelastete Raste, z.B. an einer Rastscheibe, vorgesehen sein.

Vorteilhaft ist jedoch das Verstellgetriebe selbsthemmend und bildet einen Bestandteil der Haltemittel. Zusätzliche Klemmmittel, Rastmittel oder dergleichen können dann zwar noch vorhanden sein, sind aber nicht unbedingt nötig. Das Verstellgetriebe umfasst zweckmäßigerweise ein Lineargetriebe, das über ein linearverstellbares Linearverstellglied mit dem ersten und/oder dem zweiten Werkstück-Tischteil bewegungsgekoppelt ist. Es ist auch möglich, dass nur ein Tischteil mit dem Linearverstellglied gekoppelt ist, während das andere Tischteil feststehend oder manuell verstellbar ist. Zweckmäßigerweise wirkt das Linearverstellgetriebe jedoch auf beide Werkstück-Tischteile.

Das Linearverstellglied ist zweckmäßigerweise mit dem ersten und dem zweiten Werkstück-Tischteil über eine Kulissenführung bewegungsgekoppelt. Zwischen dem jeweiligen Werkstück-Tischteil und dem Linearverstellglied ist dann eine Kulisse angeordnet, die ein Führungsteil führt, beispielsweise einen Führungsvorsprung, einen Randbereich des jeweiligen Werkstück-Tischteils oder dergleichen. Die Kulisse kann am Werkstück-Tischteil oder am Linearverstellglied angeordnet sein.

Das Linearverstellglied kann aber auch über eine Schwenkarmanordnung mit dem ersten und/oder dem zweiten Werkstück-Tischteil bewegungsgekoppelt sein. Mit dem jeweiligen Werkstück-Tischteil und dem Linearverstellglied ist dann ein Schwenkarm schwenkbar verbunden.

Das Lineargetriebe umfasst zweckmäßigerweise eine Spindelmutter und eine Spindel, die die Spindelmutter durchdringt. Dann bildet die Spindel oder die Spindelmutter das vorgenannte Linearverstellglied. Die Spindel oder die Spindelmutter, je nach dem welches Bauteil das Linearverstellglied bildet, ist dann zweckmäßigerweise mit dem jeweiligen Werkstück-Tischteil bewegungsgekoppelt. Alternativ zu einer Spindelmutter und einer Spindel wäre auch beispielsweise ein Zahnstangengetriebe oder ein sonstiges Lineargetriebe möglich.

Das Verstellgetriebe umfasst zweckmäßigerweise eine Handhabe, z.B. ein Handrad, einen Hebel oder dergleichen, mit der die Winkelstellungen der beiden Werkstück-Tischteile verstellbar sind. Somit ist eine werkzeuglose Betätigung möglich. Prinzipiell denkbar wäre aber auch eine motorische Betätigung der beiden Werkstück-Tischteile, eine Betätigung mit Hilfe eines Werkzeuges, z.B. eines Inbusschlüssels oder dergleichen. Die Handhabe ist vorzugsweise mit der Spindel oder der Spindelmutter drehgekoppelt.

Beispielsweise ist es möglich, dass die Spindelmutter außenseitig von einem Bediener ergriffen wird und insofern eine Dreh-Handhabe bildet. Die Spindelmutter ist dann eine Art Handrad. Es versteht sich, dass ein Handrad aber auch beispielsweise an der Spindel angeordnet sein kann.

Weiterhin ist es möglich, dass die Handhabe über ein Zahnradgetriebe, insbesondere ein Kegelradgetriebe mit dem Lineargetriebe drehgekoppelt ist. Somit können eine Bewegungsachse des Lineargetriebes und eine Drehachse der Handhabe winkelig zueinander stehen, was eine platzsparende Konfiguration möglich macht.

Beispielweise verläuft eine Drehwelle, mit der die Handhabe verbunden ist, parallel zur Schwenkachse oder zu den Schwenkachsen des oder der Werkstück-Tischteile. Die Handhabe ist dann zwischen dem ersten und dem zweiten Werkstück-Tischteil angeordnet, was platzsparend ist.

Prinzipiell könnten zwar das erste und das zweite Werkstück-Tischteil um voneinander separate Schwenkachsen schwenkbar gelagert sein. Zweckmäßig und bevorzugt ist jedoch einen gemeinsame Schwenkachse. Zwischen der gemeinsamen Schwenkachse und dem Gehäuse der Hand-Werkzeugmaschine ist vorzugsweise ein fester Abstand vorgesehen. Die gemeinsame Schwenkachse kann durch eine durchgehende Schwenkwelle oder ein durchgehendes Schwenklager für beide Werkstück-Tischteile realisiert sein. Es ist aber auch möglich, dass für die Realisierung der gemeinsamen Schwenkachse für jedes Werkstück-Tischteil ein separates Schwenklager vorhanden ist.

Zwar ist es möglich, dass der Werkstück-Tisch mit Hilfe eines Werkzeugs, beispielweise eines Schraubwerkzeugs oder dergleichen, am Gehäuse montierbar ist. Bevorzugt ist jedoch, dass der Werkstück-Tisch werkzeuglos am Gehäuse montierbar ist. Die Werkstück-Tischbasis hat zweckmäßigerweise einen Befestigungsabschnitt zur Befestigung am Gehäuse, an dem mindestens eine plane Anlagefläche zur Anlage an mindestens einer am Gehäuse angeordneten Stützfläche angeordnet ist. Die Planflächen ermöglichen eine exakte Anordnung des Werkstück-Tischs am Gehäuse und somit eine präzise Positionierung der Hand-Werkzeugmaschine bezüglich des zu bearbeitenden Werkstücks.

Die Befestigungseinrichtung hat zweckmäßigerweise eine manuell betätigbare Handhabe, z.B. einen Handhebel, ein Handrad oder dergleichen, um den Werkstück-Tisch am Gehäuse zu befestigen, ohne das ein Bediener ein Werkzeug benötigt.

Die Befestigungseinrichtung hat z.B. einen relativ zu einem Widerlager beweglich gelagerten Haltebacken, der zwischen einer zum Halten des Werkstück-Tischs am Gehäuse vorgesehenen Haltestellung und einer zum Entfernen des Werkstück-Tischs vom Gehäuse vorgesehenen Freigabestellung beweglich ist. Der Haltebacken kann beispielsweise mit dem vorgenannten Handhebel direkt oder über ein Betätigungsgetriebe betätigt werden.

Zum Verspannen des Werkstück-Tischs am Gehäuse ist es vorteilhaft, wenn die Befestigungseinrichtung und/oder der Befestigungsabschnitt des Tischs mindestens eine Schrägfläche aufweisen.

Nachfolgend werden Ausführungsbeispiele der Erfindung anhand der Zeichnung erläutert. Es zeigen:

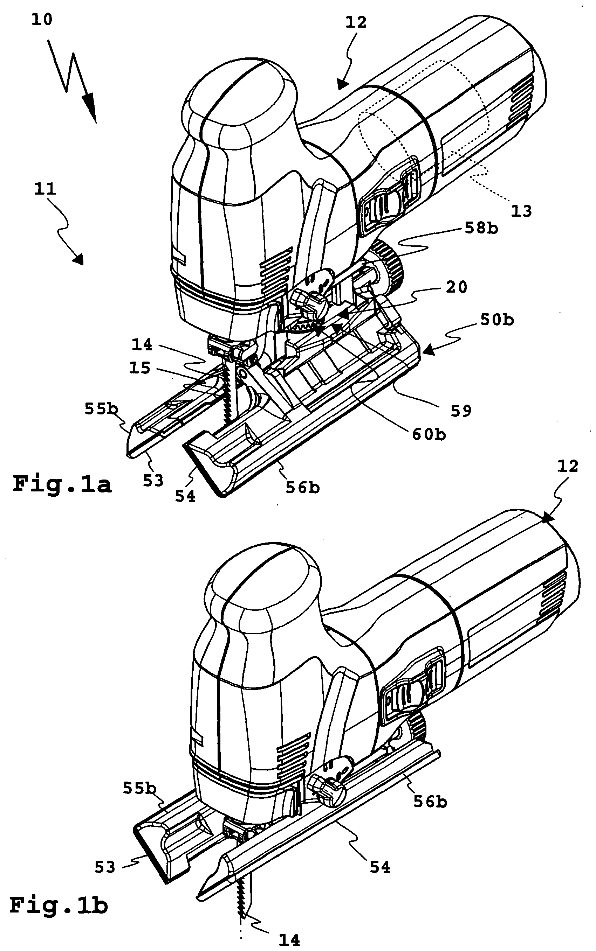

- Fig. 1a, 1b: perspektivische Schrägansichten eines ersten Ausführungsbeispieles eines Werkstück-Tischs mit zueinander hin und voneinander weg geschwenkten Werkstück-Tischteilen,

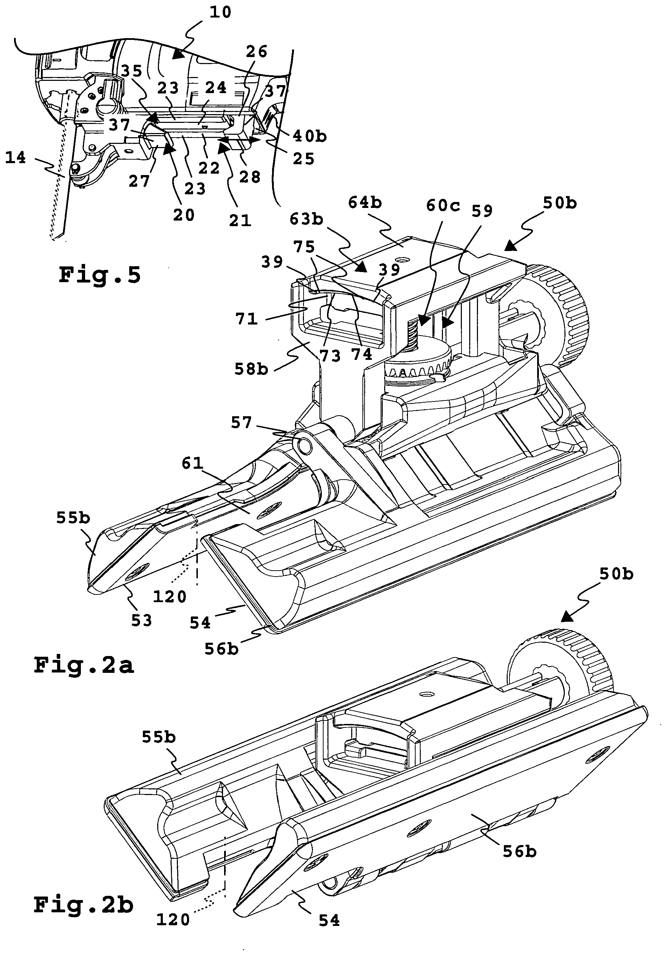

- Fig. 2a, 2b: den Werkstück-Tisch in den Stellungen gemäß Figuren 1a, 1b schräg von hinten,

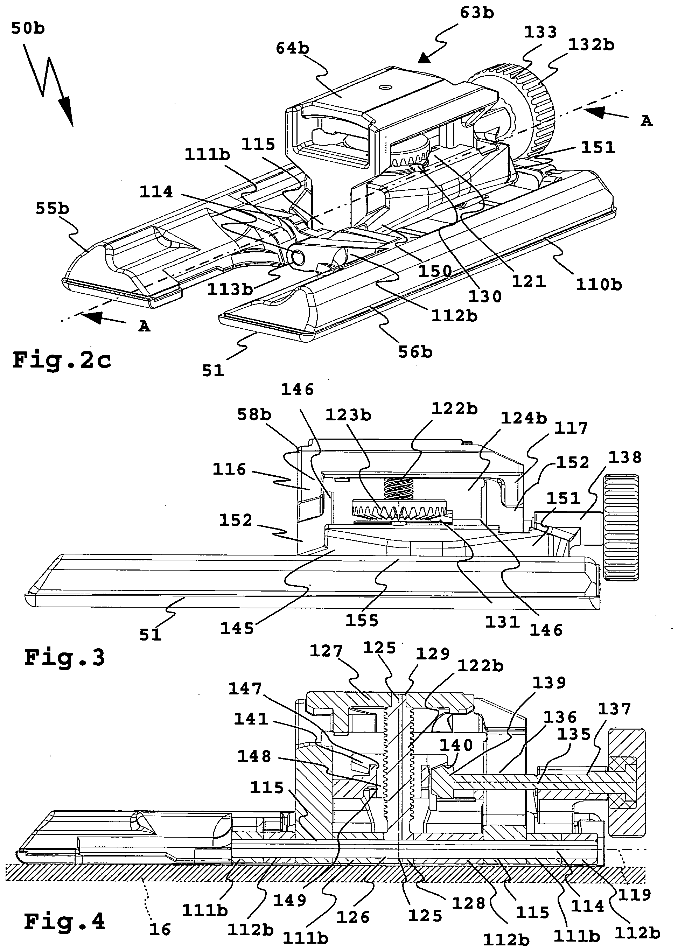

- Figur 2c: eine Ansicht entsprechend Figuren 2a, 2b, wobei die Werkstück-Tischteile so ausgerichtet sind, dass ihre Führungsflächen in einer Ebene liegen,
- Figur 3: eine Seitenansicht des Werkstück-Tischs gemäß Figur 2c,
- Figur 4: einen Seitenquerschnitt des Werkstück-Tischs gemäß Figur 2c entlang einer Schnittlinie A-A,
- Figur 5: eine Schrägansicht von unten eines vorderen unteren Teils der Hand-Werkzeugmaschine gemäß Figur 1a zur Darstellung einer Befestigungseinrichtung,

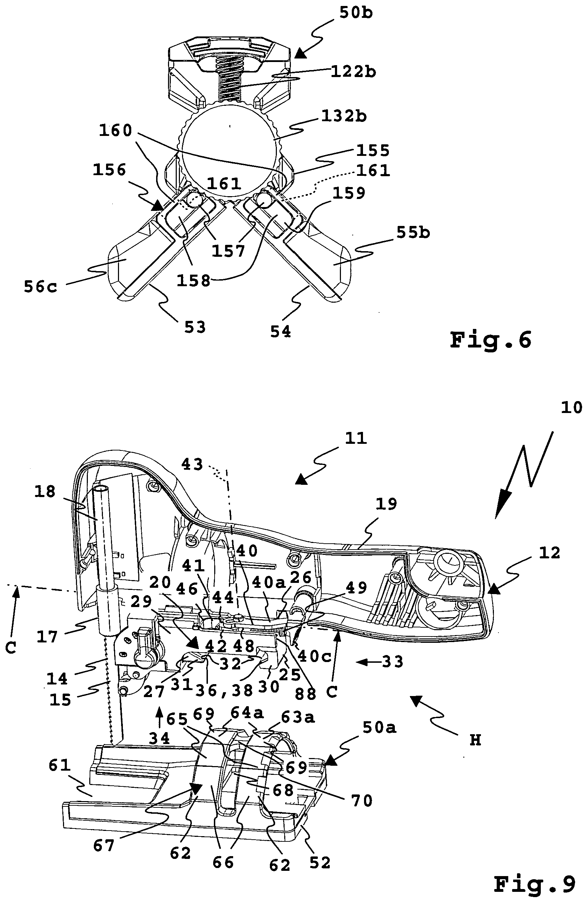

- Figur 6: eine Stirnseitenansicht des Werkstück-Tischs gemäß Figur 2c,

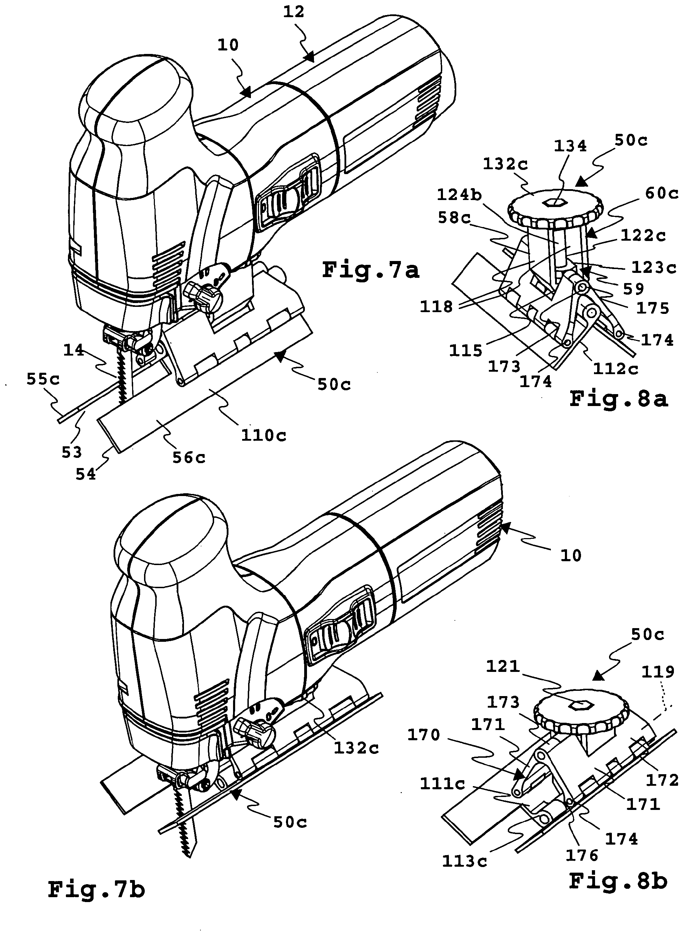

- Fig. 7a, 7b: die Hand-Werkzeugmaschine gemäß Figuren 1a, 1b mit einem Werkstück-Tisch in einer zweiten Ausführungsform mit zueinander hin geschwenkten und voneinander weg geschwenkten WerkstückTischteilen,
- Fig. 8a, 8b: den Werkstück-Tisch gemäß Figuren 7a, 7b ohne die Hand-Werkzeugmaschine,
- Figur 9: eine perspektivische Schrägansicht der Hand-Werkzeugmaschine gemäß Figur 1a mit einem von ihr entfernten Werkstück-Tisch mit einer festen, nicht verstellbaren Führungsfläche,
- Figur 10: eine Auflageplatte zur Vergrößerung einer Auflagefläche eines Werkstück-Tischteils,
- Figur 11: die Auflageplatte gemäß Figur 10 im an einem Werkstück-Tischteil des Werkzeugtischs gemäß Figuren 1 bis 6 montierten Zustand in perspektivischer Schrägansicht.

Eine Hand-Werkzeugmaschine 10, z.B. eine Hand-Säge 11, weist einen in einem Gehäuse 12 angeordneten elektrischen Antriebsmotor 13 zum Antreiben eines Werkzeugs 14 auf. Die Hand-Säge 11 ist beispielsweise eine Stichsäge, das Werkzeug 14 ein Säge-Werkzeug 15, z.B. ein Sägeblatt. Mit der Hand-Werkzeugmaschine 10 können Werkstücke 16 bearbeitet, nämlich gesägt werden.

Das Gehäuse 12 weist Gehäuseschalen 19 auf, die beispielsweise mittels Schrauben miteinander verbunden sind.

Die Hand-Werkzeugmaschine 10 ermöglicht winkelige Schnitte in unterschiedlichen Winkellagen bezüglich des Werkstückes 16, wobei eine präzise Führung der Hand-Werkzeugmaschine 10 in den jeweiligen Winkellagen durch wahlweise an der Hand-Werkzeugmaschine 10 befestigbare Werkstück-Tische 50a, 50b und 50c erleichtert ist. Die Werkstück-Tische 50a, 50b, 50c können werkzeuglos mit einer am Gehäuse 12 angeordneten Befestigungseinrichtung 20 montiert werden.

Der Werkstück-Tisch 50a ist zur Führung an planen Werkstück-Oberflächen vorgesehen und kann neben der im Normalbetrieb üblichen Mittellage, bei der das Säge-Werkzeug 15 im Wesentlichen senkrecht vor eine Führungsfläche 51 an der Unterseite einer Führungsplatte 52 vorsteht, auch in Winkelstellungen oder Schrägstellungen bezüglich des Säge-Werkzeugs 15 verstellt und mit der Befestigungseinrichtung 20 befestigt werden, bei denen das Säge-Werkzeug 15 schräg, beispielsweise in Winkellagen von 22,5° und 45°, vor die Führungsfläche 51 vorsteht.

Ein Werkstück-Tisch 50b, 50c hingegen sind zur Bearbeitung beispielsweise runder oder polygonaler Werkstück-Oberflächen vorgesehen, an die eine erste Führungsfläche 53 an einem Werkstück-Tischteil 55b, 55c und eine zweite Führungsfläche 54 eines zweiten Werkstück-Tischteils 56b, 56c angelegt werden können. In einer Mittellage der Werkstück-Tischteile 55b, 56b; 55c, 56c fluchten die beiden Führungsflächen 53, 54 miteinander, so dass sie insgesamt eine Führungsfläche 51 bilden.

Die Werkstück-Tischteil 55b, 56b sind mittels eines Schwenklagers 57 schwenkbeweglich an einer Werkstück-Tischbasis 58b gelagert.

Zum Halten der Werkstück-Tischteile 55b, 56b; 55c, 56c sind Haltemittel 59 vorgesehen. Die Haltemittel 59 umfassen ein selbsthemmendes Verstellgetriebe 60b, 60c, mit denen die Werkstück-Tischteile 55b, 56b; 55c, 56c in verschiedene Winkelstellungen zueinander verstellt werden können.

Ein unterer Abschnitt des von einer Werkzeug-Aufnahme 17 am unteren Ende einer durch den Antriebsmotor 13 antreibbaren Hubstange 18 angeordneten Säge-Werkzeugs 15 steht durch eine Durchtrittsöffnung 61 der Führungsplatte 52 bzw. der Werkstück-Tischteile 55b, 56b; 55c, 56c nach unten vor die Führungsflächen 51, 53 und 54 vor.

An der Oberseite der Führungsplatte 52 des Werkstück-Tischs 50a sind zwei bogenförmige, zueinander parallel verlaufende Befestigungshalter 62 angeordnet. Die Befestigungshalter 62 umfassen oder bilden Befestigungsabschnitte 63a zur Befestigung an der Befestigungseinrichtung 20.

Der obere Abschnitt der Werkstück-Tischbasis 58b bildet einen Befestigungsabschnitt 63b zur Befestigung an der Befestigungseinrichtung 20.

Die Befestigungseinrichtung 20 ist in einem Stützbereich 21 an der Unterseite des Gehäuses 12 angeordnet. Am Stützbereich 21 ist eine Stützfläche 22 vorgesehen, die als eine Planfläche ausgestaltet ist. Die Stützfläche 22 ist in zwei Stützflächenabschnitte 23 gegliedert, zwischen denen ein Zwischenraum 24 vorhanden ist. Die Stützflächenabschnitte 23 fluchten zur Bildung der Stützfläche 22 miteinander.

Korrespondierend mit der planen Stützfläche 22 sind Anlageflächen 64a, 64b der Befestigungsabschnitte 63a, 63b ebenfalls als Planflächen ausgestaltet.

Die Anlagefläche 64a bildet eine mittlere Anlagefläche einer Anlageflächenanordnung oder eines an der Oberseite der Befestigungshalter 62 angeordneten Anlagebereichs 67, der weitere, zu der eine mittlere Anlagefläche bildenden Anlagefläche 64a winkelige Anlageflächen 65 und 66 umfasst. Die Anlageflächen 65 und 66 sind in einer Winkelstellung von 22,5° und 45° zu der mittleren Anlagefläche 64 winkelig. Der Anlagebereich 67 ist symmetrisch, so dass auf beiden Seiten der mittleren Anlagefläche 64 jeweils eine zu dieser winkelige Anlagefläche 65 und 66 vorhanden ist.

Zwischen den beiden Befestigungshaltern 62 ist ein Zwischenraum 68 vorhanden, der somit jede der Anlageflächen 64a, 65 und 66 in zwei mit dem Zwischenraum 68 zueinander beabstandete Anlageflächenabschnitte 69 gliedert. Außer einem die beiden Befestigungshalter 62 verbindenden, im Bereich der mittleren Anlagefläche 64a angeordneten Verbinder 70 befindet sich kein Bauteil zwischen den beiden Befestigungshaltern 62. Aber auch der Verbinder 70 ist hinter die Anlageflächenabschnitt 69 zurückversetzt, so dass nur die Anlageflächenabschnitte 69 mit dem Stützbereich 21 in Kontakt treten.

Somit sind sowohl die Stützflächenabschnitte 23 als auch die Anlageflächenabschnitte 69 zueinander beabstandet, so dass die Kontaktflächen zwischen dem Stützbereich 21 und dem Anlagebereich 67 einen Abstand zueinander aufweisen und eine kippstabile Kontaktlage im Anlagebereich 67 realisiert ist.

Ein Haltebacken 25 der Befestigungseinrichtung 20 ist an einem Schiebelager 26 zu einem Widerlager 27 hin und von diesem weg schiebebeweglich gelagert, was durch einen Pfeil 28 angedeutet ist. Zwischen dem Widerlager 27 und dem Haltebacken 25 befindet sich der Stützbereich 21.

Das Schiebelager 26 sowie der Stützbereich 21 sind an einem Stützkörper 29 an der Unterseite des Gehäuses 12 vorgesehen. Der Stützkörper 29 ist beispielweise ein Bestandteil eines Getriebegehäuses für ein Getriebe, über das der Antriebsmotor 13 die Hubstange 18 linear auf und ab antreibt. Der Stützkörper 29 und die Befestigungsabschnitte 63a, 63b bestehen vorzugsweise aus Metall, z.B. Aluminium oder dergleichen, was eine hohe Maßgenauigkeit ermöglicht.

Das Widerlager 27 und der Haltebacken 25 sind hakenförmig, vorzugsweise klauenförmig ausgestaltet. Ein Haltebacken-Vorsprung 30 des Haltebackens 25 sowie ein Widerlager-Vorsprung 31 des Widerlagers 27 stehen in Richtung des Stützbereichs 21 vor. Die Vorsprünge 30, 31 untergreifen von einander entgegengesetzten Seiten die beiden Befestigungshalter 62 unterhalb der Anlageflächen 64a, 65 oder 66 des Werkstück-Tischs 50a oder greifen in Halteaufnahmen 71 an dem Befestigungsabschnitt 63b des Werkstück-Tischs 50b ein.

Die Vorsprünge 30, 31 sind zu ihren freien Enden hin von dem Stützbereich 21 weg schräg geneigt. Innenseiten der Vorsprünge 30, 31 bilden somit Schrägflächen 32, die beim Bewegen des Haltebackens 25 in Richtung des Widerlagers 27 in der Art eines Keilgetriebes wirksam sind. Die Befestigungsabschnitte 63a, 63b werden dabei vom Haltebacken 25 in Richtung des Widerlagers 27 verlagert, wobei Schrägflächen 72 an den Befestigungshaltern 62 oder Schrägflächen 73 an den Halteaufnahmen 71 an den Schrägflächen 32 entlang gleiten. Die Neigung der Schrägflächen 72, 73 korrespondiert mit der Neigung der Schrägflächen 32, d.h. die jeweiligen freien Endbereiche der Schrägflächen 72, 73 sind in Richtung des Anlagebereichs 67 bzw. der Anlagefläche 64b geneigt, so dass beim Verlagern des Haltebackens 25 in Richtung des Widerlagers 27 die Schrägflächen 32 an den Schrägflächen 72 oder 73 entlang gleiten und eine Schließkraft 33, die in Richtung des Widerlagers 27 wirksam ist, in eine den Anlagebereich 67 des Werkstück-Tisch 50a oder die Anlagefläche 64b des Werkstück-Tischs 50b gegen den Stützbereich 21 spannende Anpresskraft 34 umgelenkt wird. Die Befestigungseinrichtung 20 bildet eine Spanneinrichtung 35.

Auch bezüglich Spannflächen 74, die durch die Schrägflächen 32 bzw. 72 und 73 gebildet sind, ist das punktuelle Anpresskonzept, das durch die Unterteilung in voneinander beabstandete Stützflächenabschnitte 23 und Anlageflächenabschnitte 69 realisiert ist, konsequent weiterverfolgt. Die Schrägflächen 72 sind durch Fasen gebildet, die an den unteren, der Führungsplatte 52 zugewandten äußeren Randbereichen der beiden Befestigungshalter 62 ausgebildet sind. Somit verlaufen die beiden Schrägflächen 72 jeweils kreisförmig. Auch die Schrägfläche 73 an den Halteaufnahmen 71 hat einen bogenförmigen Verlauf. Somit haben die Spannkörper 37 der Befestigungseinrichtung 20 bildenden Vorsprünge 30 und 31 mit ihren seitlichen Randbereichen 38 Kontakt mit den Schrägflächen 72, 73, während zwischen den Randbereichen 38 liegende mittlere Abschnitte der Vorsprünge 30, 31 von den bogenförmigen Schrägflächen 72, 73 kontaktfrei beabstandet sind.

Die Randbereiche 38 sind zweckmäßigerweise korrespondierend mit bogenförmigem Verlauf der Schrägflächen 72 schräg geneigt, so dass die Randbereiche 38 zu den mittleren Abschnitten der Vorsprünge 30, 31 ansteigend schräg verlaufen.

Die Schrägflächen 72, 73 bilden Spannflächen 74. Die Spann-Vorsprünge bildenden Vorsprünge 30, 31 der Spanneinrichtung 35 wirken mit ihren Kontaktflächen 36 bereitstellenden Randbereichen 38 auf zueinander beabstandete Spannflächenabschnitte 75, die jeweils Randbereichen der Anlageflächen 64a, 65, 66 des Werkstück-Tischs 50a oder der Anlagefläche 64b des Werkstück-Tischs 50b gegenüberliegen. Somit ist ein weiter Abstand zwischen Kontaktbereichen 39 der Spanneinrichtung 35 und dem Stützbereich 21 einerseits und den Befestigungsabschnitten 63a, 63b andererseits realisiert.

Die Befestigungseinrichtung 20 ist mit einem Hand-Bedienelement 40 manuell bedienbar, das auf ein Betätigungsgetriebe 41 wirkt. Ein Betätigungshebel 40a dient als Hand-Bedienelement 40. Der Betätigungshebel 40a ist mit einem Kurvenkörper 42 gekoppelt, der am Stützkörper 29, z.B. dem Getriebegehäuse, um eine Schwenkachse 43 schwenkbar gelagert ist. In einer Freigabestellung F steht der Betätigungshebel 40a vom Gehäuse 12 ab, in einer Haltestellung H, bei der der Betätigungshebel 40a den Haltebacken 25 zum Widerlager 27 hin bewegt, fluchtet ein Handstück 40b mit einer Außenkontur des Gehäuses 12.

An dem Handstück 40b können Rastmittel, beispielsweise Rastvorsprünge oder Rastausnehmungen, vorgesehen sein, die den Betätigungshebel 40a in der Haltestellung H verrasten.

Eine Umfangsfläche des Kurvenkörpers 42, die um die Schwenkachse 43 herum verläuft, bildet eine Steuerkurve 44, die auf eine mit dem Haltebacken 25 gekoppelte Betätigungsfläche 45 wirkt. Die Betätigungsfläche 45 ist an einer Außenumfangsfläche eines Federglieds 46 vorgesehen, das auf einen in dem Schiebelager 26 aufgenommenen Schlittenkörper 47 wirkt, an dem der Haltebacken 25 angeordnet ist und nach unten an einer Ausnehmung 88 des Stützkörpers 29 aus dem Gehäuse 12 vorsteht. Die Steuerkurve 44 verläuft exzentrisch um die Schwenkachse 43, so dass der Kurvenkörper 42 in der Haltestellung H mit verhältnismäßig großer Kraft auf den Schlittenkörper 47 und somit den Haltebacken 25 wirkt. Das Federglied 46 schafft einen gewissen federnden Ausgleich, so dass die Befestigungseinrichtung 20 mit verhältnismäßig großer Spannkraft, allerdings doch vorhandener Feder-Elastizität in ihrer Haltestellung H bleibt.

In der Freigabestellung F wirkt ein anderer Abschnitt der Steuerkurve 44 auf eine der Betätigungsfläche 45 gegenüberliegende Betätigungsfläche 48, die durch eine Feder 49 an die Steuerkurve 44 gespannt ist. Durch die wie das Federglied 46 ein Federmittel bildende Feder 49 ist auch in der Freigabestellung F eine federnde Elastizität beim Betätigungsgetriebe 41 vorhanden.

Die zueinander winkelverstellbaren ersten und zweiten Führungsflächen 53, 54 sind an Unterseiten von Plattenabschnitten 110b, 110c der Werkstück-Tischteile 55b-56c angeordnet. Von den Plattenabschnitten 110b, 110c stehen Schwenkarme 111b, 112b, 111c, 112c ab, an deren freien Enden Lageraufnahmen 113b, 113c angeordnet sind. Die Lageraufnahmen 113b, 113c nehmen eine Lagerwelle 114 auf, die ihrerseits an Lageraufnahmen 115 an den Tischbasen 58b, 58c schwenkbar gelagert ist.

Die Lageraufnahmen 115 sind an nach unten vorstehenden freien Enden von Trägern 116, 117 der Tischbasis 58c vorgesehen. Die freien Enden der Träger 116-118 stehen nicht vor die Führungsflächen 53 und 54 vor.

Die die Lageraufnahmen 113, 115 aufweisenden Lagerbereiche sind abwechselnd aneinandergereiht, so dass eine klavierbandartige Lagerung realisiert ist. So liegen z.B. Seitenflächen der freien Enden der Träger 116-118 im Bereich der Lageraufnahmen 115 im Wesentlichen flächig, jedoch gleitend an Lagerabschnitten der Schwenkarme 111b-112c im Bereich der Lageraufnahmen 113b, 113c an, so dass die Schwenkarme 111b-112c zwar um eine durch die Lagerwelle 114 definierte Schwenkachse 119 schwenkbar, zu dieser jedoch nicht seitlich verkippbar sind.

Die Werkstück-Tischteile 55b, 56b, 55c, 56c sind um eine gemeinsame Schwenkachse 119 schwenkbar bezüglich der Tischbasen 58b, 58c gelagert.

Wenn nun die Tischteile 55b-56c frei bezüglich der Schwenkachse 119 schwenkbar wären, was an sich denkbar ist, könnte. das Werkzeug 14 beliebige Winkelstellungen bezüglich der Führungsflächen 53, 54 einnehmen. Bei den Werkstück-Tischen 50b, 50c ist jedoch eine simultane Führung der Tischteile 55b, 56b sowie 55c und 56c durch die Verstellgetriebe 60b, 60c realisiert, so dass das Werkzeug 14 stets an einer Winkelhalbierenden 120 zwischen den Führungsflächen 53, 54 angeordnet ist, unabhängig von der jeweiligen Winkelstellung der Führungsflächen 53, 54 zueinander.

Die Verstellgetriebe 60b, 60c umfassen Lineargetriebe 121, bei denen eine Spindel 122b, 122c eine Spindelmutter 123b, 123c durchdringt. Die Spindeln 122b, 122c sind in seitlich durch die Träger 116, 117 bzw. 118 begrenzten Getriebegehäusen 124b, 124c aufgenommen.

Beispielsweise werden Haltevorsprünge 125 an den Längsenden der Spindel 122b an einer Halteaufnahme 129 an einem oberen Querträger 127 der Tischbasis 58b gehalten. Der Querträger 127 verbindet die beiden Träger 116, 117, so dass die Tischbasis 58b U-förmig ist. Der Querträger 127 verläuft parallel zur Lagerwelle 114. Ein unteres Ende 128 der Spindel 122b weist eine Lageraufnahme 126 auf, die von der Lagerwelle 114 durchdrungen wird. Durch die Halteaufnahme 129 und/oder die Lagerwelle 114 ist die Spindel 122b drehfest im Getriebegehäuse 124b angeordnet.

Die Spindel 122c ist anders als die drehfest gehaltene Spindel 122b drehbar in ihrem Getriebegehäuse 124c aufgenommen, wobei in der Zeichnung nicht sichtbare Lageraufnahmen für die Spindel 122c beispielsweise an die Träger 118 verbindenden oberen und unteren Querträgern oder Verbindungsteilen des Getriebegehäuses 124c angeordnet sind.

Die Spindeln 122b, 122c verlaufen parallel zu den Trägern 116-118 und stehen senkrecht zur Schwenkachse 119.

Obere Endbereiche der Träger 116, 117 und die Oberseite des oberen Querträger 127 bilden den Befestigungsabschnitt 63b des Werkstück-Tischs 50b. An den oberen Enden der Träger 116, 177 sind die Halteaufnahmen 71 angeordnet. An der Oberseite des oberen Querträgers 127 ist die plane Anlagefläche 64b zur Anlage am Stützbereich 21 des Gehäuses 12 angeordnet.

Die Spindelmuttern 123b, 123c sind jeweils durch eine Drehbetätigung linear entlang der Spindeln 122b, 122c auf und ab beweglich. Dazu wird beim Verstellgetriebe 60b die Spindelmutter 123b mittels eines Betätigungsgetriebes 130 betätigt, das ein Winkelgetriebe 131, insbesondere ein Kegelradgetriebe, umfasst. Das Betätigungsgetriebe 130 ist mittels eines Handrades 132b betätigbar das eine Handhabe 133 bildet.

Beim Verstellgetriebe 60c hingegen ist ein Handrad 132c unmittelbar an dem Gehäuse 12 zugewandten Ende 134 der Spindel 122c angeordnet und mit der Spindel 122c drehfest, beispielsweise formschlüssig, verbunden, so dass durch eine Drehbetätigung des Handrads 132c die Spindel 122c drehbar ist, um die Spindelmutter 123c linear entlang der Spindel 122c zu verstellen.

Das Handrad 132b des Betätigungsgetriebes 130 ist an einem Längsende einer Drehwelle 135 angeordnet, die parallel zur Schwenkachse 119 verläuft. Das Handrad 132b steht frei vor die Plattenabschnitte 110b vor, so dass es leicht ergriffen und drehbetätigt werden kann.

Die Drehwelle 135 ist an einem Drehlager 137 eines Lagerbocks 138 drehbar gelagert und durchdringt ein Langloch 136 am Träger 117. Der Lagerbock 138 ist zwischen dem Träger 117 und dem Handrad 132b an einem Führungskörper 145 angeordnet, der mit der Spindel 122b gekoppelt ist und somit mit dieser entlang der Spindel 122b linear verfährt. Das Langloch 136 ermöglicht diese lineare Verstellung.

Ein Kegelrad 139, das an dem Handrad 132b entgegengesetzten Längsende der Drehwelle 135 angeordnet ist, kämmt mit einer Kegelradzahnung 140 an der ebenfalls als ein Kegelrad ausgestalteten Spindelmutter 123b. Somit kann die Spindelmutter 123b durch eine Drehbetätigung der Drehwelle 135 und des Kegelrads 139 in Drehung versetzt werden.

Die Spindelmuttern 123b, 123c bilden Linearverstellglieder 141 der Lineargetriebe 121.

Die Spindelmutter 123b ist mit dem Führungskörper 145 gekoppelt, der korrespondierend zur Längsverstellachse der Spindelmutter 123b im durch das Getriebegehäuse 124b begrenzten Innenraum linear geführt ist. Beispielsweise stehen vor die Träger 116, 117 nach innen Führungsvorsprünge 146 vor, die in nicht sichtbaren Führungsausnehmungen am Führungskörper 145 eingreifen.

Ein Lagervorsprung 147 der Spindelmutter 123b ist drehbar in einer Lageraufnahme 148 des Führungskörpers 145 gelagert. Die Lageraufnahme 148 befindet sich an einem mittleren, zwischen den Trägern 116, 117 angeordneten Abschnitt des Führungskörpers 145. Der Lagervorsprung 147 steht vor die Kegelradzahnung 140 vor und ist an seiner Innenseite mit einem Gewinde für die Spindel 122b versehen. Ein am in der Zeichnung unteren freien Ende des Lagervorsprungs 147 angeordneter Sicherungsring 149 hält den die Lageraufnahme 148 aufweisenden Abschnitt des Führungskörpers 145 am Lagervorsprung 147, so dass der Führungskörper 145 bei einer Drehung der Spindelmutter 123b und somit einer Linearverstellung an der Spindel 122b linear von der Spindelmutter 123b bzw. dem Linearverstellglied 141 mitgenommen wird.

Führungsarme 150, 151 an einander entgegengesetzten Seiten des Führungskörpers 145 umgreifen die Träger 116, 117. Innenseiten der Führungsarme 150, 151 sind als Gleitflächen oder Führungsflächen ausgestaltet, die an Führungsflächen 152 an den den Führungsarmen 151 zugewandten Außenseiten entlang gleiten. Somit bilden auch die Führungsflächen 152 sowie die die diese umgreifenden Führungsarme 150, 151 Bestandteile einer Linearführung für den Führungskörper 145 an der Tischbasis 58b.

Der Führungskörper 145 bildet ein Koppelglied 155 einer Kulissenführung 156. Vor die Führungsarme 150, 151 stehen Führungsteile 157, beispielsweise im Wesentlichen zylindrische Führungsvorsprünge 146, vor, die in Kulissen 158 an den Werkstück-Tischteilen 55b, 56b eingreifen. Die Kulissen 158 sind beispielsweise Langlöcher 159, die an dem Koppelglied 155 zugewandten Innenseiten der Schwenkarme 111b, 112b angeordnet sind. Die Führungsvorsprünge oder Führungsteile 157 stehen parallel zur Schwenkachse 119 vor die Führungsarme 150, 151 vor und nehmen die schwenkflügelartigen Tischteile 55b, 56b in der Art von Schwenkflügeln mit, wenn das Koppelglied 155 mittels des Lineargetriebes 121 auf und ab angetrieben wird.

Die Kulissen 158, die vorn und hinten jeweils am ersten und zweiten Werkstück-Tischteil 55b, 56b angeordnet sind, sind fensterartig ausgestaltet. An einer von den Führungsflächen 53, 54 abgewandten Seite sind die fensterartigen Kulissen 158 durch ein Führungselement 160 begrenzt. Das Führungselement 160 bildet sozusagen einen Quersteg oder ein Querelement der jeweiligen fensterartigen Kulisse 158.

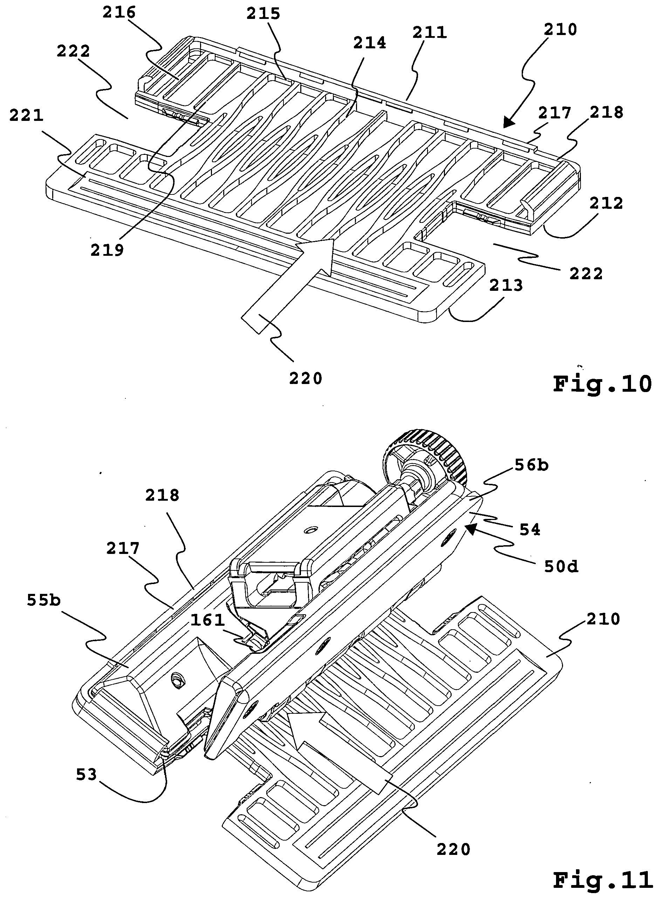

Bei der im Ausführungsbeispiel dargestellten Ausführungsform ist das Führungselement 160 ein feststehendes Führungselement. Alternativ ist es auch möglich, an Stelle der feststehenden Führungselemente 160 Rast-Führungselemente 161 vorzusehen, die die Führungsteile 157 zwar im Normalbetrieb halten, jedoch bei zu hoher Belastung freigeben. Eine solche Belastung kann beispielsweise durch einen ungeschickten Bedienereingriff entstehen, wenn der Bediener beispielsweise die Werkstück-Tischteile 55b und/oder 56b mit großer Kraft betätigt und zudem dabei vorhandene Hebelkräfte nutzt. Die Führungsteile 157 können bei dieser bevorzugten Ausführungsform der Erfindung sozusagen aus den Kulissen 156 ausrasten oder ausklinken. Mithin stellen also die Rast-Führungselemente 161 einen Überlastungsschutz dar. Entsprechend federnde Rast-Führungselemente 161, die beispielsweise im Querschnitt S-förmig sind und die zapfenartigen oder bolzenartigen Führungsteile 157 übergreifen, sind bei dem gegenüber dem Werkstück-Tisch 50b modifizierten Werkstück-Tisch 50d gemäß Figur 11 realisiert.

Bei dem Werkstück-Tisch 50c ist zur Kopplung des Linearverstellglieds 141 bzw. der Spindelmutter 123c mit den beiden Tischteilen 55c, 56c eine Schwenkarmanordnung 170 mit Schwenkarmen 171 vorgesehen. Die beiden Schwenkarme 171 sind plattenförmig und umfassen beispielsweise Schwenkplatten 172. Die Schwenkarme 171 sind über erste Schwenkgelenke 173 schwenkbar mit dem Linearverstellglied 141 bzw. der Spindelmutter 123c und mittels zweiter Schwenkgelenke 144 mit den beiden Schwenkarmen 171 verbunden. Die Verbindung der ersten Schwenkgelenke 173 mit der Spindelmutter 123b ist beispielsweise durch eine Gelenkwelle 175 verwirklicht, die parallel zur Schwenkachse 119 an einander entgegengesetzten Seiten vor die Spindelmutter 123b vorstehen und korrespondierende Lageraufnahmen an den Schwenkarmen 171 durchdringen. Mithin ist eine klavierbandartige Gelenkanordnung realisiert.

Ebenfalls in der Art eines Klavierbands ist die Schwenkkoppelung der Schwenkgelenke 174. Gelenkwellen 176 der zweiten Schwenkgelenke 174 durchdringen Lageraufnahmen an den der Tischbasis 58c zugewandten Innenseiten oder Oberseiten der Plattenabschnitte 110c sowie der Schwenkarme 171.

Das Handrad 132c ist im montierten Zustand des Werkstück-Tisches 50c unterhalb des Gehäuses 12 angeordnet, steht jedoch soweit seitlich vor das Gehäuse 12 vor, dass es bequem von einem Bediener ergriffen werden kann.

Dadurch, dass die Gesamt-Führungsfläche eines Werkstück-Tisches, z.B. einem in den Figur 11 dargestellten Werkstück-Tisch 50d, bei relativ zueinander verstellten Werkstück-Tischteilen 55b, 56b nur teilweise genutzt werden kann, nämlich in Bezug auf eines der Werkstück-Tischteile 55b, 56b, ist beispielsweise die Bearbeitung von Randbereichen eines Werkstückes schwierig. Hier schafft das in den Figuren 10 und 11 dargestellte System Abhilfe:

Zur Vergrößerung der ersten oder zweiten Führungsfläche 53, 54 kann am ersten oder zweiten Werkstück-Tischteil 55b, 56b ein Auflageelement 210 lösbar angeordnet werden. Das Auflageelement 210 ist zweckmäßigerweise als eine Auflageplatte 211 ausgestaltet, deren vom Werkstück-Tisch 50d abgewandte Seite 212 eine Führungsfläche 213 bereitstellt, die größer ist als die erste oder zweite Führungsfläche 53, 54, nämlich vorteilhaft mehr als doppelt so groß. Die Auflageplatte 211 ist beispielsweise ein Kunststoffteil oder Metallteil, das vorteilhaft durch eine Rippenstruktur verstärkt ist.

Das Auflageelement 210 kann in der Art eines Schuhs auf die Werkstück-Tischteile 55b oder 56b aufsteckbar sein. Dabei liegt eine der Seite 212 entgegengesetzte Oberseite 215 eines Halteabschnitts 216 des Auflageelements 210 an der ersten oder zweiten Führungsfläche 53, 54 an. Der Halteabschnitt 216 weist ferner Haltemittel 217, beispielsweise einen Haltevorsprung 218, auf, der das jeweilige Werkstück-Tischteil 55b, 56b übergreift. Der Haltevorsprung 218 ist vorliegend in der Draufsicht U-förmig, so dass das jeweilige Werkstück-Tischteil 55b, 56b an einer freien, nicht vom Haltevorsprung 218 begrenzten Seite in einer Einschieberichtung 220 her eingesteckt oder eingeschoben werden kann.

Vor den Halteabschnitt 216 steht ein Auflageabschnitt 221 vor, deren gemeinsame Unterseite 212 die Führungsfläche 213 bereitstellt. Die Führungsfläche 213 entspricht in etwa einer Gesamt-Führungsfläche, die der durch die von den Werkstück-Tischteilen 55b, 56b bereitgestellten ersten und zweiten Führungsfläche 53, 54 entspricht.

Zwischen den Abschnitten 216, 221 sind jeweils Ausnehmungen 222 für das Werkzeug 14 vorhanden. Es sind zweckmäßigerweise zwei an einander entgegengesetzten Stirnseiten angeordnete Ausnehmungen 222 vorgesehen, so dass das Auflageelement 210 wahlweise am Werkstück-Tischteil 55b oder 56b anordenbar ist.

## Patentansprüche

1. Hand-Werkzeugmaschine, insbesondere maschinelle Hand-Säge (11) oder maschineller Hobel, mit einem Werkzeug (14) zur Bearbeitung eines Werkstücks (16), einem in einem Gehäuse (12) aufgenommenen Antriebsmotor (13) zum Antreiben des Werkzeugs (14), und mit einem an dem Gehäuse (12) angeordneten Werkstück-Tisch (50b; 50c) zum Anlegen an das Werkstück, wobei ein Abschnitt des Werkzeugs (14) vor den Werkstück-Tisch (50b; 50c) an einer von dem Gehäuse (12) abgewandten Seite vorsteht, wobei der Werkstück-Tisch (50b; 50c) ein erstes Werkstück-Tischteil (55b; 55c) mit einer ersten Führungsfläche (53) und ein zweites Werkstück-Tischteil (56b; 56c) mit einer zweiten Führungsfläche (54) zum Anlegen an das Werkstück aufweist, wobei das erste und das zweite Werkstück-Tischteil (55b, 56b; 55c, 56c) beweglich an einer Werkstück-Tischbasis (58b; 58c) gelagert sind, und wobei der Werkstück-Tisch (50b; 50c) Haltemittel (59) zum Festlegen des ersten Werkstück-Tischteils (55b; 55c) und des zweiten Werkstück-Tischteils (56b; 56c) in mindestens zwei unterschiedlichen Winkelstellungen der Führungsflächen (53, 54) zueinander umfasst, **dadurch gekennzeichnet, dass** sie ein Verstellgetriebe (60b; 60c) zu einer Verstellung der Winkelstellungen der Werkstück-Tischteile (55b, 56b; 55c, 56c) zueinander aufweist.

2. Hand-Werkzeugmaschine nach Anspruch 1, **dadurch gekennzeichnet, dass** das erste und/oder das zweite Werkstück-Tischteil (55b, 56b; 55c, 56c) schwenkbeweglich an einer Werkstück-Tischbasis (58b; 58c) gelagert sind, und dass eine jeweilige Schwenkachse oder eine gemeinsame Schwenkachse parallel zu einer Bearbeitungsebene, insbesondere Sägeebene, des Werkzeugs (14) verläuft.

3. Hand-Werkzeugmaschine nach Anspruch 1 oder 2, **dadurch gekennzeichnet, dass** die erste Führungsfläche (53) und die zweite Führungsfläche (54) zwischen einer ersten Stellung, in der die Führungsflächen (53, 54) voneinander weg weisen, und einer zweiten Stellung, in der die Führungsflächen (53, 54) einander gegenüber liegen, beweglich, insbesondere schwenkbar, sind.

4. Hand-Werkzeugmaschine nach einem der vorhergehenden Ansprüche, **dadurch gekennzeichnet, dass** das Werkzeug (14) zwischen der ersten und der zweiten Führungsfläche (53, 54) vor den Werkstück-Tisch (50b; 50c) vorsteht und/oder dass das Werkzeug (14) bei jeder Winkelstellung der ersten und der zweiten Führungsfläche (53, 54) zueinander an einer oder parallel zu einer Winkelhalbierenden (120) eines Winkels zwischen den Führungsflächen (53, 54) angeordnet ist.

5. Hand-Werkzeugmaschine nach einem der vorhergehenden Ansprüche, **dadurch gekennzeichnet, dass** die Haltemittel (59) eine Klemmeinrichtung zum Klemmen der Werkstück-Tischteile (55b, 56b; 55c, 56c) in der jeweiligen Winkelstellung aufweisen.

6. Hand-Werkzeugmaschine nach einem der vorhergehenden Ansprüche, **dadurch gekennzeichnet, dass** das Verstellgetriebe (60b; 60c) selbsthemmend ist und einen Bestandteil der Haltemittel (59) bildet und/oder dass das Verstellgetriebe (60b; 60c) ein Lineargetriebe (121) umfasst, das über ein linear verstellbares Linearverstellglied (141) mit dem ersten und/oder dem zweiten Werkstück-Tischteil (55b, 56b; 55c, 56c) bewegungsgekoppelt ist.

7. Hand-Werkzeugmaschine nach Anspruch 6, **dadurch gekennzeichnet, dass** das Linearverstellglied (141) mit dem ersten und/oder dem zweiten Werkstück-Tischteil (55b, 56b) über eine Kulissenführung (156) bewegungsgekoppelt ist, die mindestens eine zwischen dem Linearverstellglied (141) und dem ersten Werkstück-Tischteil (55b) oder dem zweiten Werkstück-Tischteil (55c) angeordnete Kulisse (158) und ein durch die Kulisse (158) geführtes Führungsteil (157) umfasst und/oder dass das Lineargetriebe (121) eine Spindelmutter (123b, 123c) und eine Spindel (122b, 122c) umfasst, die die Spindelmutter (123b, 123c) durchdringt.

8. Hand-Werkzeugmaschine nach Anspruch 6 oder 7, **dadurch gekennzeichnet, dass** das Linearverstellglied (141) über eine mindestens einen Schwenkarm (171) umfassende Schwenkarmanordnung (170) mit dem ersten und/oder dem zweiten Werkstück-Tischteil (55c, 56c) bewegungsgekoppelt ist, und dass der mindestens eine Schwenkarm (171) schwenkbar mit dem Linearverstellglied (141) und schwenkbar mit dem ersten oder dem zweiten Werkstück-Tischteil (55c, 56c) verbunden ist.

9. Hand-Werkzeugmaschine nach einem der vorhergehenden Ansprüche, **dadurch gekennzeichnet, dass** das Verstellgetriebe (60b; 60c) eine Handhabe (133), insbesondere ein Handrad (132b; 132c), zum Verstellen der Winkelstellungen der Werkstück-Tischteile (55b, 56b; 55c, 56c) umfasst, wobei die Handhabe (133) zweckmäßigerweise über ein Betätigungsgetriebe (130), insbesondere ein Winkelgetriebe (131) oder ein Kegelradgetriebe, mit dem Lineargetriebe (121) drehgekoppelt ist.

10. Hand-Werkzeugmaschine nach einem der vorhergehenden Ansprüche, **dadurch gekennzeichnet, dass** das erste Werkstück-Tischteil (55b; 55c) und das zweite Werkstück-Tischteil (56b; 56c) an der Werkstück-Tischbasis (58b; 58c) um eine gemeinsame Schwenkachse (119) schwenkbar gelagert sind und/oder die Werkstück-Tischbasis (58b; 58c) einen Befestigungsabschnitt (63b) zur Befestigung an dem Gehäuse (12) aufweist und der Befestigungsabschnitt (63b) mindestens eine plane Anlagefläche (64b) zur Anlage an mindestens einer am Gehäuse (12) angeordneten Stützfläche (22) aufweist.

11. Hand-Werkzeugmaschine nach einem der vorhergehenden Ansprüche, **dadurch gekennzeichnet, dass** sie eine Befestigungseinrichtung (20) mit einer manuell betätigbaren Handhabe (40), insbesondere einem Handhebel (40a), zur werkzeuglosen Befestigung des Werkstück-Tischs (50b; 50c) an dem Gehäuse (12) aufweist, wobei die Befestigungseinrichtung (20) zweckmäßigerweise mindestens einen relativ zu einem Widerlager (27) beweglich gelagerten Haltebacken (25) aufweist, der zwischen einer zum Halten des Werkstück-Tischs (50b; 50c) an dem Gehäuse (12) vorgesehenen, zu dem Widerlager (27) hin bewegten Haltestellung (H) und einer zum Entfernen des Werkstück-Tischs (50b; 50c) von dem Gehäuse (12) vorgesehenen, von dem Widerlager (27) entfernten Freigabestellung (F) beweglich ist und/oder wobei an der Befestigungseinrichtung (20) und/oder dem Befestigungsabschnitt (63a; 63b) vorteilhaft mindestens eine Schrägfläche (32, 72, 73) zum Verspannen des Werkstück-Tischs (50b; 50c) an dem Gehäuse (12) vorhanden ist.

12. Hand-Werkzeugmaschine nach einem der vorhergehenden Ansprüche, **dadurch gekennzeichnet, dass** sie ein an dem ersten und/oder dem zweiten Werkstück-Tischteil (55b, 56b; 55c, 56c) lösbar befestigbares, die erste oder zweite Führungsfläche (53, 54) vergrößerndes Auflageelement (210), insbesondere eine Auflageplatte (211), aufweist.

13. Hand-Werkzeugmaschine nach einem der vorhergehenden Ansprüche, **dadurch gekennzeichnet, dass** sie Hand-Säge, insbesondere eine Stichsäge oder eine Kreissäge, ist und das Werkzeug (14) ein Säge-Werkzeug (15) ist.

14. Werkstück-Tisch (50b; 50c) für eine Hand-Werkzeugmaschine (10) nach einem der vorhergehenden Ansprüche, die ein Werkzeug (14) zur Bearbeitung eines Werkstücks (16), ein in einem Gehäuse (12) aufgenommenen Antriebsmotor (13) zum Antreiben des Werkzeugs (14), und einen an dem Gehäuse (12) angeordneten Werkstück-Tisch (50b; 50c) zum Anlegen an das Werkstück aufweist, wobei ein Abschnitt des Werkzeugs (14) vor den Werkstück-Tisch (50b; 50c) an einer von dem Gehäuse (12) abgewandten Seite vorsteht, wobei der Werkstück-Tisch (50b; 50c) ein erstes Werkstück-Tischteil (55b; 55c) mit einer ersten Führungsfläche (53) und ein zweites Werkstück-Tischteil (56b; 56c) mit einer zweiten Führungsfläche (54) zum Anlegen an das Werkstück aufweist, wobei das erste und das zweite Werkstück-Tischteil (55b, 56b; 55c, 56c) beweglich an einer Werkstück-Tischbasis (58b; 58c) gelagert sind, und wobei der Werkstück-Tisch (50b; 50c) Haltemittel (59) zum Festlegen des ersten Werkstück-Tischteils (55b; 55c) und des zweiten Werkstück-Tischteils (56b; 56c) in mindestens zwei unterschiedlichen Winkelstellungen der Führungsflächen (53, 54) zueinander umfasst, **dadurch gekennzeichnet, dass** der Werkstück-Tisch (50b; 50c) ein Verstellgetriebe (60b; 60c) zu einer Verstellung der Winkelstellungen der Werkstück-Tischteile (55b, 56b; 55c, 56c) zueinander aufweist.

## Claims

1. Hand-operated power tool, in particular hand-operated power saw (11) or power plane, comprising a tool (14) for machining a workpiece (16), a drive motor (13) accommodated in a housing (12) for driving the tool (14) and a work table (50b; 50c) located on the housing (12) for placing against the workpiece, wherein a section of the tool (14) projects in front of the work table (50b; 50c) on a side remote from the housing (12), wherein the work table (50b; 50c) comprises a first work table part (55b; 55c) with a first guide surface (53) and a second work table part (56b; 56c) with a second guide surface (54) for placing against the workpiece, wherein the first and the second work table part (55b, 56b; 55c, 56c) are movably mounted on a work table base (58b; 58c), and wherein the work table (50b; 50c) comprises holding means (59) for fixing the first work table part (55b; 55c) and the second work table part (56b; 56c) in at least two different mutual angular positions of the guide surfaces (53, 54), **characterised in that** the power tool comprises an adjusting gear mechanism (60b; 60c) for adjusting the mutual angular positions of the work table parts (55b, 56b; 55c, 56c).

2. Hand-operated power tool according to claim 1, **characterised in that** the first and/or the second work table part (55b, 56b; 55c, 56c) is/are pivotably mounted on a work table base (58b; 58c), and **in that** a respective pivot axis or a common pivot axis extends parallel to a machining plane, in particular a sawing plane, of the tool (14).

3. Hand-operated power tool according to claim 1 or 2, **characterised in that** the first guide surface (53) and the second guide surface (54) are movable, in particular pivotable, between a first position, in which the guide surfaces (53, 54) point away from one another, and a second position, in which the guide surfaces (53, 54) lie opposite one another.

4. Hand-operated power tool according to any of the preceding claims, **characterised in that** that the tool (14) projects in front of the work table (50b; 50c) between the first and the second guide surface (53, 54), and/or **in that** that the tool (14) is located at or parallel to an angle bisector (120) of an angle between the guide surfaces (53, 54) in any angular position of the first and the second guide surface (53, 54).

5. Hand-operated power tool according to any of the preceding claims, **characterised in that** the holding means (59) comprise a clamping device for clamping the work table parts (55b, 56b; 55c, 56c) in the respective angular position.

6. Hand-operated power tool according to any of the preceding claims, **characterised in that** the adjusting gear mechanism (60b; 60c) is self-locking and forms a part of the holding means (59), and/or **in that** the adjusting gear mechanism (60b; 60c) comprises a linear gear mechanism (121) motion-coupled to the first and/or the second work table part (55b, 56b; 55c, 56c) via a linearly adjustable linear adjusting member (141).

7. Hand-operated power tool according to claim 6, **characterised in that** the linear adjusting member (141) is motion-coupled to the first and/or the second work table part (55b, 56b) via a link guide (156), which comprises at least one link (158) located between the linear adjusting member (141) and the first work table part (55b) or the second work table part (55c), and a guide part (157) passing through the link (158), and/or **in that** the linear gear mechanism (121) comprises a spindle nut (123b, 123c) and a spindle (122b, 122c) passing through the spindle nut (123b, 123c).

8. Hand-operated power tool according to claim 6 or 7, **characterised in that** the linear adjusting member (141) is motion-coupled to the first and/or the second work table part (55c, 56c) via a swivel arm assembly (170) comprising at least one swivel arm (171), and **in that** the at least one swivel arm (171) is pivotable joined to the linear adjusting member (141) and pivotably joined to the first or the second work table part (55c, 56c).

9. Hand-operated power tool according to any of the preceding claims, **characterised in that** the adjusting gear mechanism (60b; 60c) comprises a handle (133), in particular a hand wheel (132b; 132c), for adjusting the angular positions of the work table part (55b, 56b; 55c, 56c), wherein the handle (133) is expediently coupled for rotation to the linear gear mechanism (121) via an operating gear system (130), in particular a bevel gear system (131).

10. Hand-operated power tool according to any of the preceding claims, **characterised in that** the first work table part (55b; 55c) and the second work table part (56b; 56c) are mounted on the work table base (58b; 58c) for pivoting about a common pivot axis (119), and/or in the work table base (58b; 58c) comprises a mounting section (63b) for mounting on the housing (12) and the mounting section (63b) has at least one flat contact surface (64b) for contacting at least one support surface (22) provided on the housing (12).

11. Hand-operated power tool according to any of the preceding claims, **characterised in that** it comprises a fastening device (20) with a manually operated handle (40), in particular a hand lever (40a), for securing the work table (50b; 50c) to the housing (12) without the use of tools, wherein the fastening device (20) expediently comprises at least one holding bar (25), which is mounted movably relative to an abutment (27) and which is movable between a holding position (H) moved towards the abutment (27) and a release position (F) remote from the abutment (27) and provided for removing the work table (50b; 50c) from the housing (12), and/or wherein at least one inclined surface (32, 72, 73) is advantageously provided on the fastening device (20) and/or the mounting section (63a; 63b) for clamping the work table (50b; 50c) to the housing (12).

12. Hand-operated power tool according to any of the preceding claims, **characterised in that** it comprises a support element (210), in particular a support plate (211), which can be releasably secured to the first and/or to the second work table part (55b, 56b; 55c, 56c) and increases the first or the second guide surface (53, 54).

13. Hand-operated power tool according to any of the preceding claims, **characterised in that** it is a hand saw, in particular a compass saw or a circular saw, and **in that** the tool (14) is a sawing tool.

14. Work table (50a; 50b) for a hand-operated power tool (10) according to any of the preceding claims, the tool comprising a tool (14) for machining a workpiece (16), a drive motor (13) accommodated in a housing (12) for driving the tool (14) and a work table (50b; 50c) located on the housing (12) for placing against the workpiece, wherein a section of the tool (14) projects in front of the work table (50b; 50c) on a side remote from the housing (12), wherein the work table (50b; 50c) comprises a first work table part (55b; 55c) with a first guide surface (53) and a second work table part (56b; 56c) with a second guide surface (54) for placing against the workpiece, wherein the first and the second work table part (55b, 56b; 55c, 56c) are movably mounted on a work table base (58b; 58c), and wherein the work table (50b; 50c) comprises holding means (59) for fixing the first work table part (55b; 55c) and the second work table part (56b; 56c) in at least two different mutual angular positions of the guide surfaces (53, 54), **characterised in that** the work table (50a; 50b) comprises an adjusting gear mechanism (60b; 60c) for adjusting the mutual angular positions of the work table parts (55b, 56b; 55c, 56c).

## Revendications

1. Machine-outil manuelle, en particulier scie manuelle mécanique (11) ou rabot mécanique, comprenant un outil (14) servant à usiner une pièce (16), un moteur d'entraînement (13) logé dans un boîtier (12) servant à entraîner l'outil (14), et comprenant un plateau porte-pièce (50b ; 50c), disposé au niveau du boîtier (12) à poser contre la pièce, dans laquelle une section de l'outil (14) fait saillie devant le plateau porte-pièce (50b ; 50c) au niveau d'un côté opposé au boîtier (12), dans lequel le plateau porte-pièce (50b ; 50c) présente une première partie de plateau porte-pièce (55b ; 55c) pourvue d'une première surface de guidage (53) et une deuxième partie de plateau-porte-pièce (56b ; 56c) pourvue d'une deuxième surface de guidage (54) à poser contre la pièce, dans laquelle la première et la deuxième partie de plateau porte-pièce (55b, 56b ; 55c, 56c) sont montées de manière mobile au niveau d'une base de plateau porte-pièce (58b ; 58c) et dans laquelle le plateau porte-pièce (50b ; 50c) comprend des moyens de maintien (59) servant à fixer l'une par rapport à l'autre la première partie de plateau porte-pièce (55b ; 55c) et la deuxième partie de plateau porte-pièce (56b ; 56c) dans au moins deux positions angulaires différentes des surfaces de guidage (53, 54), **caractérisée en ce qu'**elle présente un engrenage d'ajustement (60b ; 60c) servant à un ajustement des positions angulaires des parties de plateau porte-pièce (55b, 56b ; 55c, 56c) les unes par rapport aux autres.

2. Machine-outil manuelle selon la revendication 1, **caractérisée en ce que** la première et/ou la deuxième partie de plateau porte-pièce (55b, 56b ; 55c, 56c) sont montées de manière mobile par pivotement au niveau d'une base de plateau porte-pièce (58b ; 58c), et qu'un axe de pivotement respectif ou un axe de pivotement commun s'étend de manière parallèle par rapport à un plan d'usinage, en particulier un plan de sciage, de l'outil (14).

3. Machine-outil manuelle selon la revendication 1 ou 2, **caractérisée en ce que** la première surface de guidage (53) et la deuxième surface de guidage (54) sont mobiles, en particulier peuvent être pivotées entre une première position, dans laquelle les surfaces de guidage (53, 54) pointent dans une direction s'éloignant l'une de l'autre, et une deuxième position, dans laquelle les surfaces de guidage (53, 54) se trouvent en vis-à-vis les unes des autres.

4. Machine-outil manuelle selon l'une quelconque des revendications précédentes, **caractérisée en ce que** l'outil (14) fait saillie devant le plateau porte-pièce (50b ; 50c) entre la première et la deuxième surface de guidage (53, 54), et/ou que l'outil (14) est disposé, dans le cas de chaque position angulaire de la première et de la deuxième surface de guidage (53, 54) l'une par rapport à l'autre, au niveau d'une bissectrice (120) ou de manière parallèle à la bissectrice d'un angle entre les surfaces de guidage (53, 54).

5. Machine-outil manuelle selon l'une quelconque des revendications précédentes, **caractérisée en ce que** les moyens de maintien (59) présentent un dispositif de serrage servant à serrer les parties de plateau porte-pièce (55b, 56b ; 55c, 56c) dans la position angulaire respective.

6. Machine-outil manuelle selon l'une quelconque des revendications précédentes, **caractérisée en ce que** l'engrenage d'ajustement (60b ; 60c) est autobloquant et forme un élément constitutif des moyens de maintien (59), et/ou que l'engrenage d'ajustement (60b ; 60c) comprend un engrenage linéaire (121), qui est couplé en déplacement à la première et/ou à la deuxième partie de plateau porte-pièce (55b, 56b ; 55c, 56c) par l'intermédiaire d'un organe d'ajustement linéaire (141) pouvant être ajusté de manière linéaire.

7. Machine-outil manuelle selon la revendication 6, **caractérisée en ce que** l'organe d'ajustement linéaire (141) est couplé en déplacement à la première et/ou la deuxième partie de plateau porte-pièce (55b, 56b) par l'intermédiaire d'un guide de coulisse (156), qui comprend au moins une coulisse (158) disposée entre l'organe d'ajustement linéaire (141) et la première partie de plateau porte-pièce (55b) ou la deuxième partie de plateau porte-pièce (55c) et une partie de guidage (157) guidé par la coulisse (158), et/ou que l'engrenage linéaire (121) comprend un écrou de broche (123b, 123c) et une broche (122b, 122c), qui traverse l'écrou de broche (123b, 123c).

8. Machine-outil manuelle selon la revendication 6 ou 7, **caractérisée en ce que** l'organe d'ajustement linéaire (141) est couplé en déplacement à la première et/ou la deuxième partie de plateau porte-pièce (55c, 56c) par l'intermédiaire d'un ensemble de bras de pivotement (170) comprenant au moins un bras de pivotement (171), et que l'au moins un bras de pivotement (171) est relié de manière à pouvoir pivoter à l'organe d'ajustement linéaire (141) et de manière à pouvoir pivoter à la première ou à la deuxième partie de plateau porte-pièce (55c, 56c).

9. Machine-outil manuelle selon l'une quelconque des revendications précédentes, **caractérisée en ce que** l'engrenage d'ajustement (60b ; 60c) comprend une poignée (133), en particulier une molette (132b ; 132c) servant à ajuster les positions angulaires des pièces de plateau porte-pièce (55b, 56b ; 55c, 56c), dans laquelle la poignée (133) est couplée en rotation à l'engrenage linéaire (121) de manière appropriée par l'intermédiaire d'un engrenage d'actionnement (130), en particulier d'un engrenage angulaire (131) ou d'un engrenage conique.

10. Machine-outil manuelle selon l'une quelconque des revendications précédentes, **caractérisée en ce que** la première partie de plateau porte-pièce (55b ; 55c) et la deuxième partie de plateau porte-pièce (56b ; 56c) sont montées au niveau de la base de plateau porte-pièce (58b ; 58c) de manière à pouvoir pivoter autour d'un axe de pivotement (119) commun, et/ou la base de plateau porte-pièce (58b ; 58c) présente une section de fixation (63b) destinée à être fixée au niveau du boîtier (12) et la section de fixation (63b) présente au moins une surface d'appui (64b) plane destinée à venir en appui au niveau d'au moins une surface de soutien (22) disposée au niveau du boîtier (12).

11. Machine-outil manuelle selon l'une quelconque des revendications précédentes, **caractérisée en ce qu'**elle présente un dispositif de fixation (20) pourvu d'une poignée (40) pouvant être actionnée de manière manuelle, en particulier un levier manuel (40a), servant à fixer sans outil le plateau porte-pièce (50b ; 50c) au niveau du boîtier (12), dans laquelle le dispositif de fixation (20) présente de manière appropriée au moins une mâchoire de maintien (25) montée de manière mobile par rapport à une butée (27), laquelle mâchoire de maintien est mobile entre une position de maintien (H) destinée à maintenir le plateau porte-pièce (50b ; 50c) au niveau du boîtier (12), déplacée en direction de la butée (27), et une position de libération (F) destinée à retirer le plateau porte-pièce (50b ; 50c) du boîtier (12), retirée de la butée (27), et/ou dans laquelle au moins une surface oblique (32, 72, 73) servant à assembler par serrage le plateau porte-pièce (50b ; 50c) au niveau du boîtier (12) est présente de manière avantageuse au niveau du dispositif de fixation (20) et/ou de la section de fixation (63a ; 63b).

12. Machine-outil manuelle selon l'une quelconque des revendications précédentes, **caractérisée en ce qu'**elle présente un élément de réception (210), en particulier une plaque de réception (211), pouvant être fixé au niveau de la première et/ou de la deuxième partie de plateau porte-pièce (55b, 56b ; 55c, 56c), agrandissant la première ou la deuxième surface de guidage (53, 54).

13. Machine-outil manuelle selon l'une quelconque des revendications précédentes, **caractérisée en ce qu'**elle est une scie manuelle, en particulier une scie sauteuse ou une scie circulaire, et l'outil (14) est un outil de scie (15).

14. Plateau porte-outil (50b ; 50c) pour une machine-outil manuelle (10) selon l'une quelconque des revendications précédentes, qui présente un outil (14) servant à usiner une pièce (16), un moteur d'entraînement (13) reçu dans un boîtier (12) servant à entraîner l'outil (14) et un plateau porte-pièce (50b ; 50c) disposé au niveau du boîtier (12) à poser contre la pièce, dans lequel une section de l'outil (14) fait saillie devant le plateau porte-pièce (50b ; 50c) au niveau d'un côté opposé au boîtier (12), dans lequel le plateau porte-pièce (50b ; 50c) présente une première partie de plateau porte-pièce (55b ; 55c) pourvue d'une première surface de guidage (53) et une deuxième partie de plateau porte-pièce (56b ; 56c) pourvue d'une deuxième surface de guidage (54) à poser contre la pièce, dans lequel la première et la deuxième partie de plateau porte-pièce (55b, 56b ; 55c, 56c) sont montées de manière mobile au niveau d'une base de plateau porte-pièce (58b ; 58c), et dans lequel le plateau porte-pièce (50b ; 50c) comprend des moyens de maintien (59) servant à fixer l'une par rapport à l'autre la première partie de plateau porte-pièce (55b ; 55c) et la deuxième partie de plateau porte-pièce (56b ; 56c) dans au moins deux positions angulaires différentes des surfaces de guidage (53, 54), **caractérisé en ce que** le plateau porte-pièce (50b ; 50c) présente un engrenage d'ajustement (60b ; 60c) servant à un ajustement des positions angulaires des parties de plateau porte-pièces (55b, 56b ; 55c, 56c) les unes par rapport aux autres.
